# FASCICULE DE BREVET EUROPEEN

(11) **EP 0 822 052 B1**
(45) Date de publication et mention de la délivrance du brevet: **22.09.2004**
(21) Numéro de dépôt: 97401777.4
(22) Date de dépôt: 24.07.1997
(51) Int. Cl.: B29C 47/06, B29C 47/56

(54) **Procédé de fabrication par extrusion d'un profilé à section variable localement**
Verfahren zur Herstellung, durch Extrusion, eines Profils mit lokal veränderlichem Querschnitt
Process for manufacturing by extrusion a profile locally varying in cross-section

(30) Priorité: 02.08.1996 FR 9609797
(43) Date de publication de la demande: 04.02.1998
(73) Titulaire: Metzeler Automotive Profile Systems Transieres, 92000 Nanterre (FR)
(72) Inventeur: Perrin, Thierry, 76100 St. Jacques s/Darnétal (FR)
(74) Mandataire: Jolly, Jean-Pierre

(56) Documents cités:
- WO-A-80/00936
- WO-A-94/25245
- FR-A- 2 572 678
- US-A- 3 724 985
- US-A- 4 374 880
- US-A- 5 296 067
- PATENT ABSTRACTS OF JAPAN vol. 010, no. 033 (M-452), 8 février 1986 & JP 60 187513 A (MITSUBISHI JUSHI KK), 25 septembre 1985,
- PATENT ABSTRACTS OF JAPAN vol. 006, no. 163 (M-152), 26 août 1982 & JP 57 077549 A (TOYODA GOSEI CO LTD), 14 mai 1982,

## Description

La présente invention concerne un procédé de fabrication par extrusion d'un profilé d'étanchéité pour véhicule automobile, en un matériau thermoplastique ou en caoutchouc, dont la section transversale varie localement.

De nombreux types de profilés d'étanchéité sont connus dans la technique.

En particulier, dans l'industrie automobile, on utilise notamment de façon extensive :
- des joints pour encadrement de porte, comprenant habituellement une partie à section en U, destinée à coiffer et pincer un bord saillant de l'encadrement de porte, et au moins un élément tubulaire attenant à la partie formant pince et apte à se déformer élastiquement sous la pression de la porte, en position fermée de celle-ci, lorsqu'il est comprimé entre cette porte et son encadrement ;
- des joints pour encadrement d'une vitre mobile d'une porte, comprenant également une partie à section en U formant pince, destinée à coiffer et pincer un bord saillant de l'encadrement de vitre, et une partie dite "coulisse" ; attenante à la partie formant pince et ayant également une section transversale à profil en U, inversé par rapport au profil de la pince, cette coulisse étant destinée à guider la vitre mobile au cours de ses déplacements, à la recevoir en position de fermeture et à assurer l'étanchéité dans cette position.

Pour plus de clarté, c'est à de tels profilés pour véhicules automobiles que l'on se référera plus particulièrement, dans la suite de la présente description.

Les problèmes rencontrés avec les profilés d'étanchéité utilisés dans l'industrie automobile tiennent notamment à la forme des encadrements de porte et de vitre, qui présentent fréquemment dans les angles de forts rayons de courbure, et aux jeux rencontrés entre les portes ou les vitres et leurs encadrements. Il est nécessaire de compenser les efforts rencontrés au cours des mouvements de fermeture, en fonction de la position relative des profilés et du bord saillant ou de la feuillure dont ils sont solidaires, notamment dans les angles des encadrements de porte.

Parmi les solutions utilisées pour répondre à ces contraintes, on peut mentionner :
- la pose d'inserts, en certains emplacements des profilés, notamment dans les angles ;
- l'injection d'une matière plastique cellulaire, notamment d'une mousse de polyuréthane, en certains emplacements déterminés du profilé ;
- une modification locale de la section transversale du profilé, notamment de la partie formant pince, ou du ou des profilés tubulaires attenants, ou encore des lèvres attenantes à une coulisse ou à une pince.

Pour mettre en oeuvre cette dernière technique, on utilise habituellement des dispositifs d'extrusion variable, qui font appel soit à une modification géométrique de la filière, à l'aide de tiroirs mobiles, soit à un accroissement du flux de matière dans la tête d'extrusion ou dans la filière, par utilisation de clapets distributeurs.

On connaît par WO 80/00 936 un procédé de production de feuilles de plastique ayant une friction superficielle accrue. On extrude sous forme stratifiée deux feuilles ou plus, que l'on étire ensemble. L'alimentation en matière destinée à former la couche superficielle est contrôlée de façon à être insuffisante pour former une couche cohérente lorsque les feuilles stratifiées sont étirées, par gonflage, par exemple.

De cette manière, la couche superficielle se brise au cours de l'étirage et donne naissance à une surface inégale, ayant un coefficient de friction accru. Il n'est pas question d'ajuster le débit ou la pression d'injection de la matière pour faire varier localement la section des couches superposées, mais au contraire de limiter le débit de cette matière de façon telle qu'au cours de l'étirage des couches superposées, la couche extérieure ne soit pas continue et se brise en pavés locaux.

Le Patent Abstract de Japan N° 60 187 513 propose de créer une couche de résine formant barrière au passage des gaz, en modifiant l'épaisseur d'une couche intermédiaire suivant la direction longitudinale d'une préforme ou précouche de mousse, "en même temps en égalisant l'épaisseur totale de l'ensemble multicouche".

Au lieu de faire varier localement la section transversale de l'ensemble, on cherche donc à homogénéiser son épaisseur.

Plus précisément, selon le document japonais, une résine polyester 11 plastifiée dans une extrudeuse 5 est fournie au distributeur 6, pour être divisée en une couche externe et une couche interne, et une résine 36 formant barrière aux gaz, plastifiée dans un autre injecteur 7, est injectée entre la couche externe et la couche interne dans le distributeur 6.

La quantité injectée par l'injecteur 7 est contrôlée en continu pour fournir des parties épaisses 33, 34, des parties minces 31, des parties d'épaisseur intermédiaire 32, et l'on arrête même temporairement l'injection pour supprimer en 35 la couche intermédiaire, de sorte que "l'épaisseur globale, y compris à la fois la couche interne et la couche externe est maintenue presque constante".

Enfin, U.S.-A-3 724 985 décrit un dispositif d'extrusion pour produire un tube ayant des caractéristiques variables suivant sa longueur et qui comprend au moins deux producteurs de matière plastique fondue qui fournissent des matières fondues différentes à une filière. "Les deux producteurs de matière plastique fondue sont commandés de façon telle que lorsqu'un producteur alimente la filière en matière fondue pour produire une première section de tube, l'autre producteur soit n'injecte pas, soit débouche dans une décharge récupérable" (voir Abrégé, fin du premier paragraphe). Dans une autre réalisation (voir dernière phrase de l'Abrégé), on produit également un tube ayant des sections de matériaux différents.

Il est d'ailleurs spécifié (col. 1, 1. 53-57 de ce brevet U.S.) que, "conformément à la présente invention, un appareil et un procédé d'extrusion sont fournis concernant l'extrusion d'un extrudât ayant différents matériaux suivant sa longueur axiale à partir d'une filière composite, qui reçoit le matériau plastique fondu sélectivement de chacun des deux dispositifs producteurs de matière plastique fondue".

La présente invention vise à faire varier localement la section transversale du profilé au cours de la phase d'extrusion de celui-ci, en modifiant de façon judicieuse et réglable le débit de la matière extrudée et/ou sa pression dans la tête d'extrusion ou dans la filière, mais sans avoir recours à des clapets distributeurs ou à une modification de la géométrie de la filière.

A cet effet, l'invention a pour objet un procédé de fabrication par extrusion d'un profilé d'étanchéité pour véhicule automobile en au moins un matériau thermoplastique
ou en caoutchouc, à section transversale variable localement, à l'aide d'une extrudeuse équipée d'une tête d'extrusion et d'une filière appropriée, ce procédé étant caractérisé en ce que l'on injecte latéralement dans la tête d'extrusion ou dans la filière une quantité additionnelle de matière thermoplastique ou de caoutchouc, à débit et à pression d'injection réglables, pendant une durée réglable, que l'on ajuste en fonction des variations de section transversale désirées, la matière additionnelle venant adhérer au matériau thermoplastique ou au caoutchouc du profilé pour créer une modification locale de sa section transversale.

La matière additionnelle injectée peut être identique à la matière principale du profilé avec laquelle elle vient en contact ou être différente de celle-ci, suivant les effets recherchés.

Lorsque l'on souhaite obtenir une modification partielle de la section, le flux secondaire de matière additionnelle est injecté de préférence dans la filière, qui sera naturellement adaptée pour recevoir la matière additionnelle et lui conférer le profil désiré, tandis que, lorsqu'on souhaite procéder à une modification générale de la section, ce flux secondaire est injecté dans la tête d'extrusion.

Le flux secondaire est de préférence injecté à l'aide d'une unité d'injection à vis pistonnante, à pression et débit commandés, disposée latéralement par rapport à l'extrudeuse.

Pour la mise en oeuvre du procédé conforme à l'invention, on peut par conséquent utiliser un dispositif de fabrication par extrusion d'un profilé d'étanchéité pour véhicule automobile en au moins un matériau thermoplastique ou en caoutchouc, à section transversale variable localement, ce dispositif comprenant une extrudeuse équipée d'une tête d'extrusion et d'une filière, et comportant une unité d'injection à vis pistonnante d'une matière thermoplastique additionnelle ou de caoutchouc, cette unité étant connectée latéralement à la tête d'extrusion ou à la filière, l'unité d'injection à vis pistonnante comprenant des moyens de réglage dans le temps de la pression et du débit d'injection de la matière plastique ou de caoutchouc.

L'unité d'injection à vis pistonnante peut être d'un type usuel. Elle peut être équipée de façon connue d'une trémie d'alimentation en matériau thermoplastique additionnel ou en caoutchouc à injecter dans la tête d'extrusion ou dans la filière de l'extrudeuse.

L'invention va être décrite ci-après de façon plus détaillée, en référence aux dessins schématiques annexés, qui n'ont pas de caractère limitatif. Sur ces dessins :
La figure 1 est un schéma d'une première forme de réalisation d'un dispositif utilisable dans le cadre l'invention ;
La figure 2 est un schéma d'une seconde forme de réalisation d'un dispositif utilisable dans le cadre l'invention ;
Les figures 3 à 8 sont des coupes transversales de profilés d'étanchéité pour véhicules automobiles, présentant des variations locales de section, réalisables par le procédé conforme à l'invention.

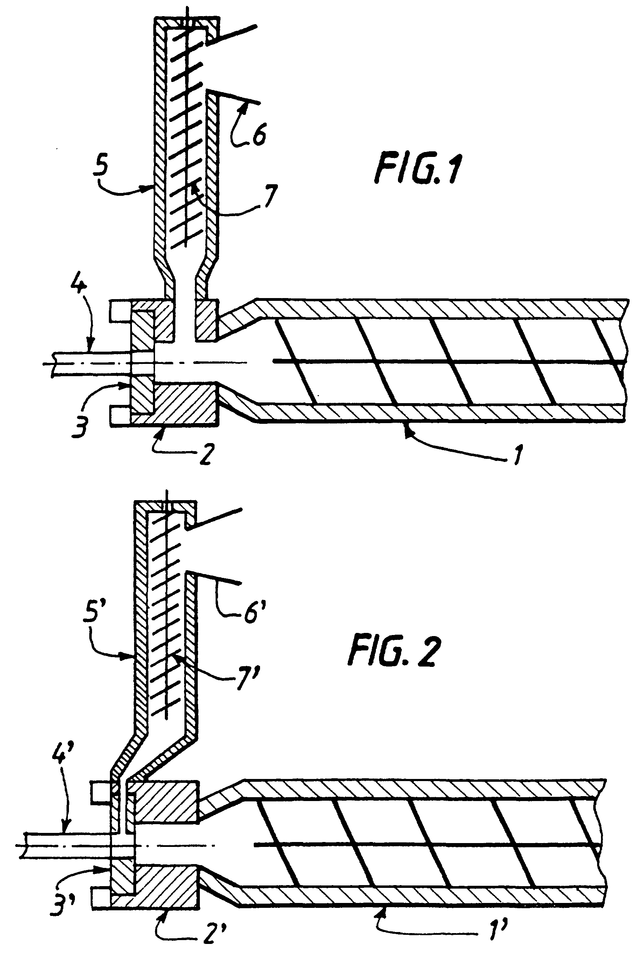

On se référera d'abord à la figure 1, qui représente un dispositif d'extrusion comprenant une extrudeuse 1, équipée d'une tête d'extrusion 2 et d'une filière 3, pour la fabrication d'un profilé 4 en matière thermoplastique ou en caoutchouc.

Une unité 5 d'injection d'une matière thermoplastique additionnelle ou de caoutchouc, alimentée en cette matière par une trémie 6 et comportant une vis pistonnante 7, est raccordée latéralement à la tête d'extrusion 2.

La pression et le débit d'injection dans la tête d'extrusion 2 de la matière additionnelle, à l'aide de l'unité 5 et de la vis pistonnante 7, sont réglables et il est ainsi possible de modifier à volonté suivant toute sa section transversale la forme d'une partie du profilé 4.

Comme indiqué ci-dessus, la matière injectée par l'unité 5 peut être identique ou non à la ou aux matières(s) extrudées ou co-extrudées par la tête 2.

Le dispositif représenté sur la figure 2, dont les parties déjà décrites en relation avec la figure 1 sont désignées par les mêmes chiffres de référence affectés de l'indice ', est sensiblement identique à celui de la figure 1, à cette différence près que l'unité d'injection 5' alimente non plus la tête d'extrusion 2', mais la filière 3'. Au lieu de modifier la forme du profilé 4' suivant toute sa section, ce dispositif permet donc de modifier de façon préférentielle certaines parties de la section, la filière étant naturellement adaptée pour recevoir la matière additionnelle et lui conférer le profil désiré.

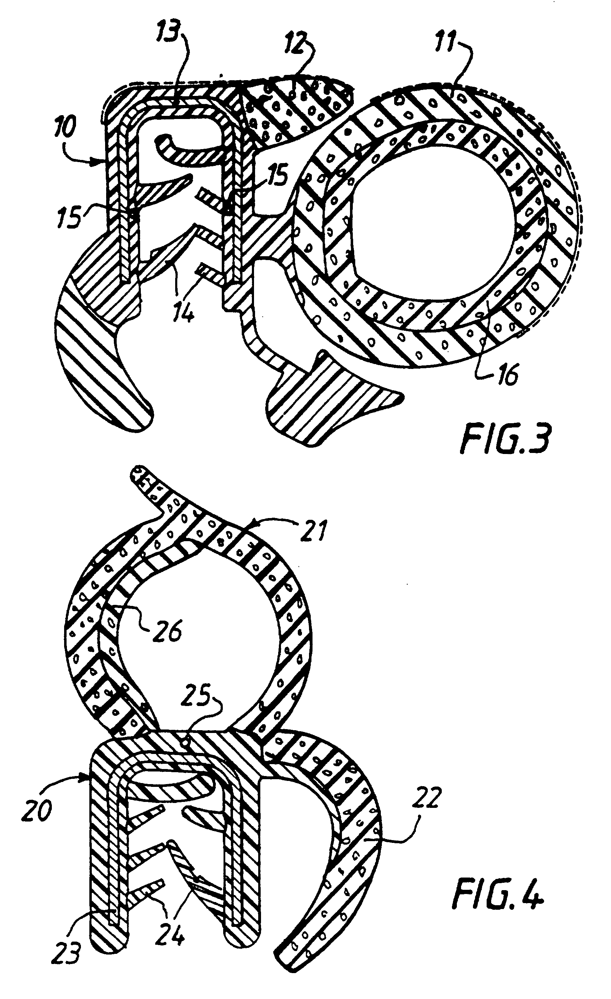

Les figures 3 à 8 sont des coupes transversales de divers profilés d'étanchéité pour véhicules automobiles, dont la section transversale a été modifiée localement, conformément à l'invention.

La figure 3 représente un joint d'étanchéité pour encadrement de porte d'automobile ou pour certains coffres. Ce joint comprend une partie à section en U, 10, en polychlorure de vinyle, destinée à coiffer et à pincer un élément saillant de l'encadrement de porte. A une branche de la partie en U 10 sont attenants un profilé tubulaire 11 en caoutchouc cellulaire, destiné à être écrasé entre la porte d'automobile et l'encadrement de porte pour assurer l'étanchéité, et une lèvre cosmétique 12, à fonction décorative et de protection, également en caoutchouc cellulaire. La partie 10 comporte, de façon connue en soi, une armature métallique 13 et des lèvres 14, qui font saillie à partir de chaque -face en vis-à-vis de la partie en U en direction de l'autre face, afin d'éviter une désolidarisation accidentelle de cette partie 10 et du bord saillant qu'elle équipe. Deux fibres de verre 15 sont noyées dans la masse de PVC de la pince 10 au voisinage des fibres neutres.

Conformément à l'invention, une couche 16 de caoutchouc cellulaire d'épaisseur variable est rapportée sur toute la surface interne du tube 11, en vue de d'améliorer la portance du tube.

Dans le joint d'étanchéité de la figure 4, destiné à équiper un coffre , on retrouve une partie formant pince 20, à section en U, en polychlorure de vinyle, à la base de laquelle sont attenantes une partie tubulaire 21 en caoutchouc cellulaire et une lèvre cosmétique 22, également en caoutchouc cellulaire. La partie 20 comprend également une armature métallique 23 et des lèvres 24, qui font saillie à partir de la face interne de chaque branche du U en direction de la branche opposée. Une fibre de verre 25 est noyée dans la base de la partie 20, au voisinage de la fibre neutre.

Conformément à l'invention, la partie tubulaire 21 comporte, sur une partie de sa face interne, une couche 26 d'épaisseur variable, sur la ou les parties de sa longueur qui correspondent aux parties incurvées de l'encadrement à équiper. On améliore ainsi la tenue du joint dans les parties incurvées, ainsi que la portance du joint.

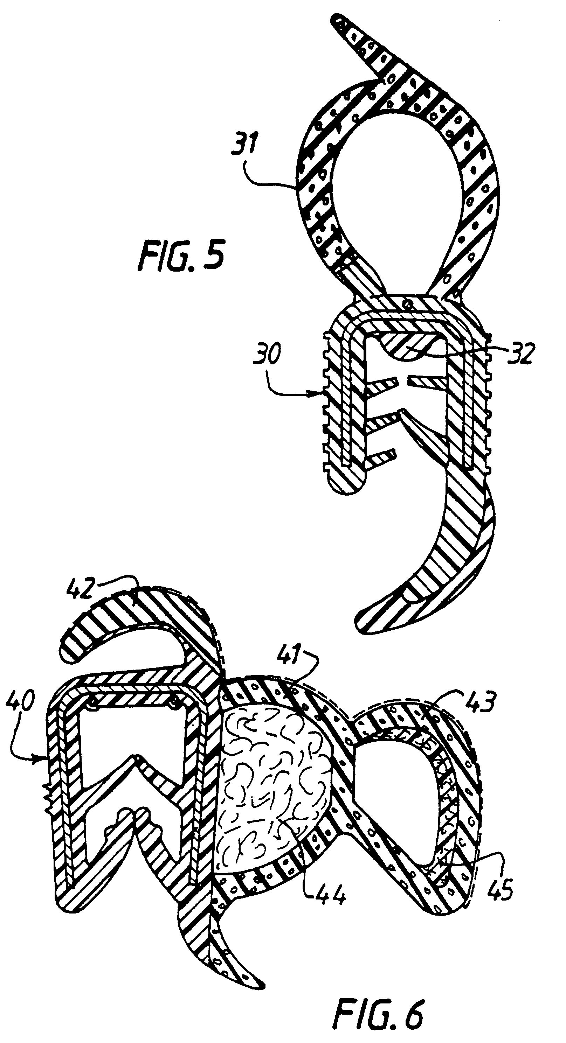

Dans le joint de la figure 5, qui est lui aussi destiné à équiper un coffre, on retrouve à nouveau une partie 30 formant pince, à section en U, en polychlorure de vinyle, à la base de laquelle est attenant un profilé tubulaire 31 en caoutchouc cellulaire.

Dans cette forme de réalisation, conformément à l'invention, une surépaisseur 32, formant bourrelet d'étanchéité d'épaisseur variable suivant une partie de la longueur de la partie formant pince 30, est appliquée sur la face interne de la base de cette partie. La matière thermoplastique utilisée pour cette surépaisseur 32 peut être du polychlorure de vinyle.

Le bourrelet ainsi formé assure l'étanchéité entre le fond de la partie formant pince 30 et le bord saillant qu'elle coiffe.

Le joint pour encadrement de porte de la figure 6 comprend une partie en U formant pince 40, un joint tubulaire 41 attenant latéralement à l'une des branches de la partie 40, une lèvre cosmétique 42 attenante à la base de cette branche, et un second joint tubulaire 43 attenant au joint 41.

Conformément à l'invention, le joint tubulaire 41 est empli sur une partie de sa longueur d'une mousse 44 de polyuréthane, afin d'améliorer la tenue et la portance du profilé. Dans le même but, une couche 45 de polyuréthane, dont l'épaisseur varie suivant la longueur du joint tubulaire 43, est appliquée localement sur la face interne de la partie de celui-ci non contiguë au joint 41.

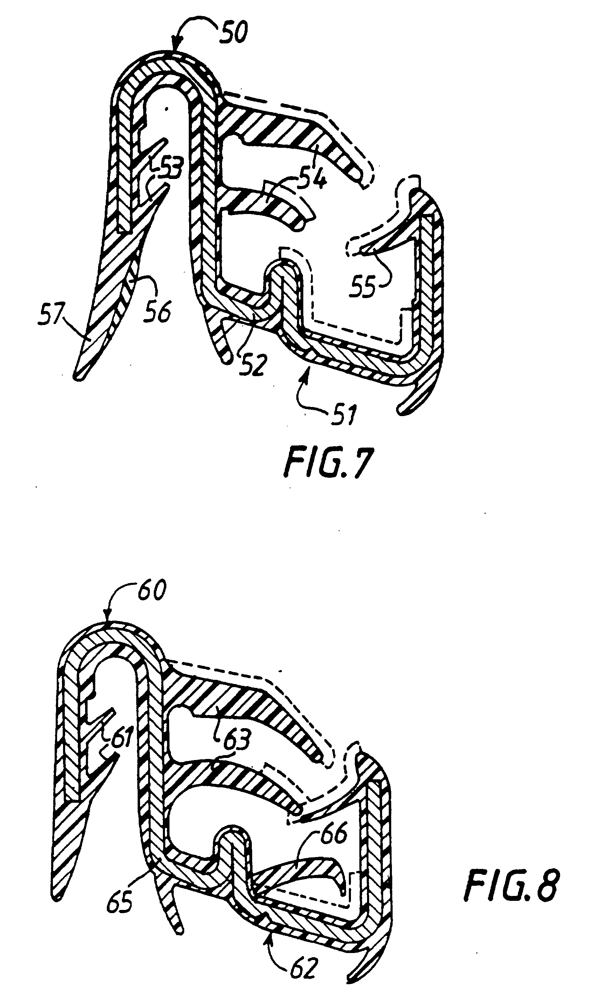

Le profilé de la figure 7 est un profilé pour encadrement d'une vitre mobile d'une porte d'automobile. Il comprend une partie 50 à section en U formant pince, destinée à coiffer une feuillure de l'encadrement de vitre, et une seconde partie à section en U, 51, dite coulisse, destinée à guider la vitre mobile dans ses déplacements et à assurer l'étanchéité en position de fermeture de cette vitre. La partie 51 est disposée en sens inverse de la partie 50, à laquelle elle est attenante, une branche du U de chaque partie étant commune à l'autre partie. Les deux parties 50 et 51 sont en polychlorure de vinyle et elles comportent une armature métallique 52. Des lèvres 53 font saillie à partir de la face interne de l'une des branches de la partie 50 en direction de l'autre branche et sont destinées à assurer l'accrochage de cette partie 50 sur la feuillure qu'elle équipe. Les deux branches de la partie 51 comportent des lèvres telles que 54 et 55, destinées à s'escamoter, lorsque la vitre mobile arrive en position de fermeture, et à venir s'appliquer dans cette position contre les faces de cette vitre, pour assurer l'étanchéité.

Conformément à l'invention, une surépaisseur d'une composition plus dure 56, en caoutchouc ou en matière plastique, est avantageusement rapportée sur la face interne, tournée vers la coulisse 51, de la lèvre 57 formant l'extrémité libre de la partie de la pince 50 non attenante à cette coulisse, avec une épaisseur variable suivant la portion de la longueur de cette lèvre 57 destinée à être disposée dans les parties à forte courbure de l'encadrement de vitre, afin de favoriser la tenue du profilé dans ces zones.

Le profilé de la figure 8 est du même type général que celui de la figure 7, et l'on y retrouve une partie à section en U formant pince 60, avec des lèvres 61, attenante à une partie 62 à section en U inversé, ou coulisse, avec des lèvres 63 et 64, les parties 60 et 62 comportant en outre une armature métallique 65.

Conformément à l'invention, une lèvre 66 fait saillie localement vers l'intérieur de la coulisse 62, au-dessus de la partie de la base de celle-ci avec laquelle la vitre mobile entre en contact en position de fermeture, afin de s'interposer entre la tranche de cette vitre et la base de la coulisse, pour amortir leur contact et améliorer l'étanchéité.

Ces quelques exemples, limités aux profilés de la technique automobile, mais qui sont transposables à l'évidence à tout autre type de profilés fabriqués par extrusion, montrent que le procédé conforme à l'invention se prête facilement à des modifications locales de la section de ces profilés, en vue de l'obtention d'effets spécifiques avantageux, moyennant un accroissement de coût réduit.

## Revendications

1. Procédé de fabrication par extrusion d'un profilé (4, 4') d'étanchéité pour véhicule automobile en au moins un matériau thermoplastique ou en caoutchouc, à section transversale variable localement suivant sa longueur, à l'aide d'une extrudeuse (1, 1') équipée d'une tête d'extrusion (2, 2') et d'une filière (3, 3') appropriée, ce procédé étant **caractérisé en ce que** l'on injecte latéralement dans la tête d'extrusion (2) ou dans la filière (3) une quantité additionnelle de matière thermoplastique ou de caoutchouc, à débit et à pression d'injection réglables, pendant une durée réglable, que l'on ajuste en fonction des variations de section transversale désirées, la matière additionnelle venant adhérer au matériau thermoplastique ou au caoutchouc du profilé pour créer une modification locale de sa section transversale.

2. Procédé selon la revendication 1, **caractérisé en ce que** la matière additionnelle injectée dans la tête d'extrusion (2) ou dans la filière (3') est identique à la matière de l'extrudeuse (1, 1') avec laquelle elle vient en contact.

3. Procédé selon la revendication 1, **caractérisé en ce que** la matière additionnelle injectée dans la tête d'extrusion (2) ou dans la filière (3') est différente de la matière de l'extrudeuse (1, 1') avec laquelle elle vient en contact.

## Patentansprüche

1. Verfahren zur Herstellung eines Dichtungsprofils (4, 4') für Kraftfahrzeuge aus mindestens einem Thermoplast oder aus Gummi mit auf seiner Länge lokal veränderlichem Querschnitt durch Extrusion mit Hilfe eines Extruders (1, 1') mit einem Extrusionskopf (2, 2') und einer geeigneten Düse (3, 3'), **dadurch gekennzeichnet, dass** man in den Extrusionskopf (2) oder in die Düse (3) eine zusätzliche Menge an Thermoplast oder Gummi mit regelbarem Einspritzdurchsatz und - druck während einer regelbaren Zeit seitlich einspritzt, die man in Abhängigkeit von den gewünschten Querschnittsänderungen einstellt, wobei das zusätzliche Material an dem Thermoplast oder an dem Gummi des Profils zu haften kommt, um eine lokale Änderung seines Querschnitts zu erzeugen.

2. Verfahren nach Anspruch 1, **dadurch gekennzeichnet, dass** das in den Extrusionskopf (2) oder in die Düse (3') eingespritzte zusätzliche Material mit dem Material des Extruders (1, 1'), mit dem es in Kontakt kommt, identisch ist.

3. Verfahren nach Anspruch 1, **dadurch gekennzeichnet, dass** das in den Extrusionskopf (2) oder in die Düse (3') eingespritzte zusätzliche Material von dem Material des Extruders (1, 1'), mit dem es in Kontakt kommt, verschieden ist.

## Claims

1. Process for manufacturing a motor-vehicle sealing strip (4, 4') by extrusion, being made of at least a thermoplastic or a rubber, with a cross section varying locally along its length, by means of an extruder (1, 1') equipped with an extrusion head (2, 2') and with an appropriate die (3, 3'), this process being **characterized in that** an additional quantity of thermoplastic or rubber is injected laterally into the extrusion head (2) or into the die (3), at an adjustable flow rate and at an adjustable injection pressure, for an adjustable time, and **in that** the additional material that will adhere to the thermoplastic or rubber of the strip is adjusted according to the desired variations in cross section in order to create a local modification of its cross section.

2. Process according to Claim 1, **characterized in that** the additional material injected into the extrusion head (2) or into the die (3') is identical to the material in the extruder (1, 1') with which it comes into contact.

3. Process according to Claim 1, **characterized in that** the additional material injected into the extrusion head (2) or into the die (3') is different from the material in the extruder (1, 1') with which it comes into contact.
